# EUROPÄISCHE PATENTSCHRIFT

(11) **EP 1 657 538 B1**
(45) Veröffentlichungstag und Bekanntmachung des Hinweises auf die Patenterteilung: **08.08.2007**
(21) Anmeldenummer: 05007699.1
(22) Anmeldetag: 08.04.2005
(51) Int. Cl.: G01M 17/007

(54) **Crashsimulationsanlage für Fahrzeuge**
Device for simulating a vehicle crash
Dispositif pour la simulation de collision d'un véhicule

(30) Priorität: 20.10.2004 DE 102004051239
(43) Veröffentlichungstag der Anmeldung: 17.05.2006
(73) Patentinhaber: IAV GmbH Ingenieurgesellschaft Auto und Verkehr, 10587 Berlin (DE)
(72) Erfinder: Weikard, Fritz, 38321 Denkte (DE)
(74) Vertreter: Bürger, Peter

(56) Entgegenhaltungen:
- EP-A1- 1 600 756
- DE-A1- 19 805 512
- DE-A1- 19 857 429
- US-A- 3 430 481

## Beschreibung

Die Erfindung betrifft eine Crashsimulationsanlage für Fahrzeuge nach dem Oberbegriff des Patentanspruches 1.

Allgemein bekannt sind Crashtestanlagen, bei denen ein Fahrzeug mit einer definierten Geschwindigkeit gegen eine feststehende Barriere gefahren wird. Aus der sich im Versuch ergebenden Deformation des Fahrzeuges sowie der Deformation der im Innenraum angeordneten Puppen, den sogenannten Dummys, und aus den auftretenden Kräften und Beschleunigungswerten können Daten gewonnen werden, die Auswirkungen von Unfällen auf Fahrzeug und Insassen beschreiben. Diese Crashtests sind allgemein bekannt und wichtiger Bestandteil des Tests und der Entwicklung von Fahrzeugen hinsichtlich der Fahrzeugsicherheit. Es werden dabei sowohl Frontalcrashtests (Aufprall auf eine zur Fahrzeugrichtung senkrecht stehende Barriere) als auch Crashtests unter einem vorgeschriebenen Winkel, vorzugsweise 30° Abweichung der Barriere aus der Senkrechten zur Fahrzeugbewegungsrichtung, durchgeführt.
Crashtests mit realen Fahrzeugen sind sehr kostenintensiv und aufwendig, da das jeweilige Fahrzeug zumindest teilweise deformiert wird sowie darin angeordnete Sensorik und Teile des Messaufbaus nicht wieder verwendet werden können. Insbesondere in einem frühen Stadium der Fahrzeugentwicklung sind Prototypenfahrzeuge sehr teuer und stehen nicht in ausreichender Menge zur Verfügung.
Daher ist es bereits vorgeschlagen worden, Anlagen zur Crashsimulation zu nutzen. Hier werden Fahrzeuge oder Teile davon auf einem beweglichen Schlitten platziert, der jeweils stark beschleunigt oder abgebremst wird. Auf das auf dem Schlitten fest angeordnete Fahrzeug wirken dabei starke Beschleunigungs- oder Verzögerungskräfte ein. Der Antrieb des Schlittens bzw. dessen Bremseinrichtung ist so gestaltet, dass reale, bei Unfallsituationen bzw. beim Fahrzeugcrash auftretende Beschleunigungswerte erreicht bzw. nachgebildet werden können. Die beschriebene Crashsimulation ist insbesondere für die Gestaltung des Interieurs eines Fahrzeuges und die Auswirkungen auf die Insassen nützlich. Der Vorteil ist die Wiederholbarkeit mit weitgehend identischem Testaufbau und die Kostenersparnis, da ein modifiziertes Fahrzeug bzw. der Testaufbau weitgehend wiederverwendet werden können.
Derartige Anlagen wurden bereits vorgeschlagen. So zeigt die DE 195 11 422 A1 eine Crashtestanlage, bei der ein auf einem Schlitten fest montiertes Fahrzeug hinsichtlich seiner Beschleunigung geregelt durch einen hydraulischen Antrieb beschleunigt bzw. abgebremst wird. Das Fahrzeug ist dabei fest auf dem Schlitten angeordnet.
Derartige Gestaltungen bilden das reale Crashverhalten nur ungenügend ab. Bewegungen des Fahrzeuges während realer Unfallsituationen, z. B. Nickbewegungen um die Fahrzeugquerachse, können mit diesem Aufbau nicht realisiert werden.

Zur Verbesserung der Abbildung der auftretenden Kräfte und Beschleunigungen ist in der DE 198 57 429 A1 vorgeschlagen, den Schlitten einer Crashsimulationsanlage so auszubilden, dass sowohl Längs- als auch Vertikalbeschleunigungen auf das Fahrzeug einwirken können. Hier ist es notwendig, vorher rechnerisch oder durch Tests zu ermitteln, welche Vertikalbeschleunigungen beim Fahrzeugcrash auftreten. Die Schlittenanordnung wird durch die zusätzlichen Aktuatoren kompliziert und teuer. Die Abbildung des realen Crashverhaltens ist dabei von der Genauigkeit der berechneten oder gemessenen Beschleunigungsverläufe abhängig. Für verschiedene Fahrzeugtypen müssen dabei verschiedene Beschleunigungsprofile vorgegeben werden.

Die DE 198 05 512 A1 zeigt eine Schlittenanordnung für eine Crashtestanlage, bei der Nickbewegungen um die Fahrzeuglängsachse simuliert werden können. Die Schlittenbahn oder das Fahrzeug sind dabei auf Stützen montiert, die mit unterschiedlicher Stützkraft beaufschlagbar sind. Durch ein Nachlassen der Stützkraft bei Beschleunigung des Schlittens sollen die bei einem realen Fahrzeugcrash auftretenden Nickbewegungen des Fahrzeuges simuliert werden. Der Schlitten ist dabei aufwendig mit Aktuatoren bestückt, welche steuerbar den Gesamtaufbau abstützen. In einer weiteren Ausführung ist die gesamte Schlittenbahn beweglich abgestützt. Zur Simulation der notwendigen Beschleunigungen müssen erhebliche Massen bewegt werden. Die Abbildung des realen Crashverhaltens ist dabei ebenfalls von der Genauigkeit der berechneten oder gemessenen Beschleunigungsverläufe abhängig. Für verschiedene Fahrzeugtypen müssen dabei verschiedene Beschleunigungsprofile vorgegeben werden.

Die US 3,430,481 zeigt einen auf Führungsschienen fahrbaren Schlitten, auf dem eine Fahrzeugsitzgruppe befestigt bzw. vertikal abgestützt ist. Über einen Antrieb wird zur Simulation von Crashsituationen der Schlitten mit der Fahrzeugsitzgruppe beschleunigt und entsprechend abgebremst. Mit dieser Vorrichtung können nur die auf den Fahrzeuginsassen bei einer Crashsituation geradlinig einwirkenden Kräfte simuliert werden. Die bei einem Crash auftretenden Nick- oder Drehbewegungen des Fahrzeuges können damit nicht nachvollzogen werden.

Der Erfindung liegt daher die Aufgabe zugrunde, eine Crashsimulationsanlage für Fahrzeuge derart zu gestalten, dass mit einem einfachen Aufbau ein reproduzierbares wirklichkeitsnahes Crashverhalten nachgebildet werden kann, bei dem Nick- und/oder Drehbewegungen des Fahrzeuges abgebildet werden können.

Diese Aufgabe wird bei gattungsgemäßen Crashsimulationsanlagen erfindungsgemäß durch die Merkmale des Patentanspruchs 1 gelöst, wobei sich vorteilhafte Ausgestaltungen aus den abhängigen Ansprüchen ergeben.

Die erfindungsgemäße Crashsimulationsanlage für Fahrzeuge besteht aus einem auf einer Bahn beweglichen Schlitten, an den ein Fahrzeug oder die Teile eines Fahrzeuges mittel- oder unmittelbar angekoppelt sind. Das Fahrzeug kann hierbei am Heck oder der Front abgeschnitten sein, so dass nur Teile des Fahrzeuges auf dem Schlitten angeordnet werden. Es ist jedoch auch möglich, das Gesamtfahrzeug auf dem Schlitten zu positionieren. Der Schlitten kann dabei auf der Bahn zusätzlich geführt sein und wird von einer Antriebs- und/oder Bremseinrichtung bewegt. Über die Antriebs- und/oder Bremseinrichtung kann auf den Schlitten eingewirkt werden, so dass gewünschte Geschwindigkeits- bzw. Beschleunigungsprofile erzeugt werden können. Die Beschleunigung zum Antrieb bzw. das Abbremsen des Schlittens können dabei permanent oder als Impuls erfolgen. Ein Auffahren in eine Bremseinrichtung oder das Beschleunigen in eine Katapulteinrichtung sind ebenso möglich, wie der gesteuerte Antrieb bzw. ein Bremsen des Schlittens selbst.

Die am Schlitten mittel- oder unmittelbar gehaltenen Fahrzeugteile sind erfindungsgemäß entgegengesetzt der simulierten Aufprallrichtung mittels eines Haltemittels an einem Halteelement befestigt. Es wird dabei lediglich entgegengesetzt zur Richtung der zur Crashsimulation einwirkenden Beschleunigung eine Haltekraft auf das Fahrzeug ausgeübt, wobei es am Schlitten lediglich abgestützt ist und sich bei einwirkenden Beschleunigungen durch Abbremsen oder Beschleunigen des Schlittens in horizontale und/oder vertikale Richtung relativ zum Schlitten bewegen kann. Das Fahrzeug bzw. die Fahrzeugteile ist/sind dabei nicht starr am Schlitten befestigt. Das Fahrzeug kann bei einwirkender Beschleunigung sowohl Nick- als auch Drehbewegungen ausführen. Das Haltemittel ist dabei selbst flexibel ausgebildet oder beweglich am Halteelement und/oder dem Fahrzeug befestigt. Der Punkt, an welchem das Haltemittel am Halteelement befestigt ist oder der Punkt, an welchem das Haltemittel am Fahrzeug bzw. an dessen Teilen befestigt ist, kann sich in einer Ausführungsform der Erfindung bei Einwirkung der Beschleunigungskräfte verändern. Erfindungsgemäß vorteilhaft erzwingt eine Veränderung der Lage des Haltepunktes eine Nick- und/oder Drehbewegung entsprechend dem realen Crashverhalten.

Die erfindungsgemäße Anordnung von Halteelement, Haltemittel und Fahrzeug auf dem Schlitten ermöglicht dabei einen flexiblen Aufbau, wobei Frontalcrashtests und Crashtests, die unter einem bestimmten Winkel zu einer Barriere erfolgen, realitätsnah nachgebildet werden.
In einer ersten Ausführungsform der Erfindung ist der Haltepunkt des Haltemittels am Fahrzeug vertikal zum Haltepunkt am Halteelement versetzt. Der Haltepunkt am Fahrzeug kann dabei vorzugsweise in vertikaler Ebene im Fahrzeugschwerpunkt liegen und der Haltepunkt am Halteelement liegt versetzt darüber. Bei einwirkenden Beschleunigungen auf den Schlitten wirkt die Trägheit des Fahrzeuges der Beschleunigung entgegen, so dass eine Zugkraft über das Haltemittel auf den höher liegenden Haltepunkt am Halteelement übertragen wird und das Fahrzeugheck angehoben wird. Mit dieser Bewegung kann eine Nickbewegung des Fahrzeuges bei einem realen Crash simuliert werden.

In einer weiteren Ausgestaltung der Erfindung ist der Haltepunkt des Haltemittels am Fahrzeug horizontal zum Fahrzeugschwerpunkt versetzt. Bei einwirkenden Beschleunigungen auf den Schlitten wirkt die Trägheit des Fahrzeuges der Beschleunigung entgegen, so dass eine Zugkraft über das Haltemittel auf den Haltepunkt am Halteelement übertragen wird und das Fahrzeugheck entsprechend der außermittig zum Schwerpunkt des Fahrzeuges angeordneten Aufhängung des Haltemittels weggedreht wird. Mit dieser Bewegung kann eine Drehbewegung des Fahrzeuges bei einem realen Crash gegen eine nicht frontal stehende Barriere simuliert werden.

Eine Kombination der beschriebenen vertikal zueinander versetzten Haltepunkte am Fahrzeug und am Halteelement sowie des horizontalen Versatzes des Haltepunktes am Fahrzeug bezogen auf den Fahrzeugschwerpunkt ist eine weitere Ausgestaltung der Erfindung. Mit dieser Anordnung können gleichzeitig Nick- und Drehbewegungen des Fahrzeuges bei einwirkenden Beschleunigungen erreicht werden.

In einer einfachen Ausgestaltung der Erfindung ist das Fahrzeug über das Haltemittel, welches vorzugsweise ein Seil ist, jeweils an Seilösen einerseits am Fahrzeug und andererseits am Halteelement befestigt. Der Haltepunkt am Fahrzeug liegt dabei horizontal verschoben zum Masseschwerpunkt des Fahrzeuges und gleichzeitig ist der Haltepunkt am Halteelement vertikal versetzt (oberhalb) des Haltepunktes am Fahrzeug am Halteelement angeordnet. Der Haltepunkt am Fahrzeug selbst liegt dabei vorzugsweise nahe dem horizontalen Masseschwerpunkt des Fahrzeuges. Wird der Schlitten positiv beschleunigt, wirkt aufgrund der Fahrzeugträgheit eine Kraft entgegen der Bewegungsrichtung des Schlittens auf das Fahrzeug, die mittels eines Haltemittels auf das Halteelement übertragen wird, so dass das Fahrzeug am Heck angehoben wird und gleichzeitig eine Drehbewegung erfährt, welche die Bewegungskurven bei einem Crashtest gegen eine nicht frontal stehende Barriere nachbildet.
Die Ausgestaltung bietet einen besonders einfachen Aufbau zur Nachbildung komplexer Bewegungskurven, wobei durch Änderung der Haltepunkte die Bahnkurven weitgehend einstellbar sind.

Zur Nachbildung der Bewegungskurven eines Fahrzeuges, welches unter einem bestimmten Winkel zu einer Barriere auftrifft, ist in einer weiteren Ausführungsform der Erfindung der Haltepunkt des Haltemittels am Fahrzeug oder am Halteelement unter Einwirkung der Beschleunigung verschiebbar. Das Haltemittel wird dabei in einer Führung gehalten, wobei sich der Haltepunkt bei einwirkender Beschleunigung verändert. Die Führung kann sich dabei in Längs- oder Querrichtung oder eine beliebige Bewegungsbahn entlang des Halteelements oder des Fahrzeuges erstrecken, um die gewünschte Bewegungsbahn des Fahrzeuges abzubilden. In einer weiteren Ausführungsform der Erfindung ist das Haltemittel ein Seil, welches in einer T-Führung hinsichtlich seines Haltepunktes am Halteelement beweglich ist und das am Haltemittel befestigte Fahrzeug bei einwirkenden Beschleunigungen auf eine durch die Veränderung des Haltepunktes bestimmte Bewegungsbahn zwingt. Hierbei kann beispielsweise das Fahrzeugheck angehoben werden und/oder eine Drehbewegung des Fahrzeuges aufgrund des sich verändernden Haltepunktes erzeugt werden.

Das Halteelement weist in einer Ausführungsform gegenüber der Bewegungsrichtung des Schlittens in horizontaler Ebene einen von 90° verschiedenen Winkel auf. Sogenannte 30°-Crashtests sind durch eine entsprechende Einstellung des Halteelements (60° Winkel des Halteelements gegenüber der Bewegungsrichtung des Schlittens in horizontaler Ebene) durchführbar. Das Haltemittel ist dabei in einer Führung angeordnet, die fest mit dem Halteelement verbunden ist, so dass ein Verändern des Haltepunktes am Halteelement entsprechend der einwirkenden Beschleunigung und der Winkelstellung der Führung erfolgt. In einer Weiterbildung der Erfindung ist die Barriere in ihrem Winkel einstellbar und kann somit jeweils vor dem Crashtest entsprechend angepasst werden. Sie wird dann für den jeweiligen Test wieder fest mit dem Schlitten verbunden.

Die Anordnung des Halteelements in einem von 90° verschiedenen Winkel gegenüber der Bewegungsrichtung des Schlittens in horizontaler Ebene ermöglicht realitätsnahe Crashtests, da das Fahrzeug ähnlich der realen Unfallsituation geradlinig beschleunigt wird und dann entsprechend der durch die Veränderung des Haltepunktes vorgegebenen Bewegungsbahn ein Wegdrehen bzw. Nicken des Fahrzeuges hervorgerufen wird, welches dem Abgleiten des Fahrzeuges an einem realen Hindernis entspricht. Ein Wegdrehen des Fahrzeuges an einer Barriere kann damit aus der geraden Bewegungsrichtung heraus durch die Bewegungsbahn des Haltemittels am Halteelement oder am Fahrzeug simuliert werden.

Die erfindungsgemäße Anordnung des Haltemittels am Halteelement oder am Fahrzeug erlaubt durch den veränderlichen Haltepunkt eine realitätsnahe Bewegung des Fahrzeuges bzw. der auf dem Schlitten angeordneten Fahrzeugteile. Es können sowohl Nickbewegungen um die Fahrzeugquerachse als auch Drehbewegungen um eine vertikal durch das Fahrzeug gelegte Achse erfolgen. Jegliche Kombinationen dieser Bewegungen sind gleichfalls möglich. Die Bewegung bzw. die einwirkenden Beschleunigungen sind dabei sehr realitätsnah, da eine Bewegungsbahn des Fahrzeuges erzwungen wird, die der Bewegungsbahn des Fahrzeuges bei Fahrt gegen ein Hindernis entspricht.

Erfindungsgemäß vorteilhaft kann das Halteelement gegenüber dem Schlitten in vertikaler Ebene einen von 90° abweichenden Winkel gegenüber der Bewegungsrichtung des Schlittens aufweisen. Das Haltemittel ist dabei in einer Führung beweglich am Fahrzeug oder am Halteelement befestigt. Bei einwirkender Beschleunigung bewegt sich das Haltemittel in der Führung und verändert den Haltepunkt des Fahrzeuges. Die Gestaltung des Halteelements und der Führung fördert in dieser Gestaltung die Nickbewegung des Fahrzeuges um dessen Querachse und bildet somit sehr gut ein reales Unfallverhalten nach.

Erfindungsgemäß ist das Fahrzeug bzw. sind die auf dem Schlitten angeordneten Fahrzeugteile gegen den Schlitten abgestützt. Die Abstützung kann dabei nachgiebig ausgeführt sein. Das Fahrzeug ist somit nicht starr mit dem Halteelement oder dem Schlitten verbunden.

In einer erfindungsgemäßen Erweiterung liegt der Haltepunkt des Haltemittels am Halteelement nicht fest. Dieser ist vielmehr geführt auf einer beliebigen Bahn veränderlich. Dies kann durch die Anordnung des Haltemittels in einer Führung erfolgen, die eine Relativbewegung des Haltemittels entlang des Halteelements ermöglicht.

In einer Ausgestaltung der Erfindung ist das Haltemittel innerhalb einer am Fahrzeug angeordneten Führung beweglich. Dies ermöglicht eine Relativbewegung des Haltemittels entlang der am Fahrzeug angeordneten Führung. In dieser Ausgestaltung kann das Haltemittel am Halteelement fest sein oder ebenfalls einen relativbeweglichen Haltepunkt aufweisen.

Für die Einstellung von realitätsnahen Parametern der Bewegungsbahn des Fahrzeuges ist das Gleitverhalten des Halteelements in der Führungsbahn einstellbar. Dies kann erfindungsgemäß durch die gezielte Gestaltung der Oberflächenpaarung von Halteelement und Führung bzw. durch die gezielte Gestaltung einer Passung erfolgen. Eine weitere Ausgestaltung ist die Verwendung eines Dämpfungsmittels, welches beispielsweise in der Führungsbahn vorgesehen sein kann.

Das Fahrzeug ist in allen Ausführungsformen auf dem Schlitten nicht ortsfest gehalten, sondern lediglich abgestützt, so dass eine Relativbewegung des Fahrzeuges zum Schlitten möglich ist. In einer bevorzugten Ausführungsform stützt sich das auf dem Schlitten angeordnete Fahrzeug bzw. dessen Teile nachgiebig, vorzugsweise elastisch gegen den Schlitten ab. In einer Ausführung kann dies durch wenigstens eine Feder erfolgen. Die Feder kann in einer Ausgestaltung lediglich stützend zwischen Schlitten und Fahrzeug wirken und jeweils nur einseitig an Schlitten oder Fahrzeug befestigt sein. In einer weiteren Ausgestaltung ist die Feder oder ein gleichartiges elastisch wirkendes Element an Schlitten und Fahrzeug gehalten. Mit der Federgestaltung wird in beiden Fällen die Bewegungsbahn des Fahrzeuges bei Beschleunigung oder Verzögerung beeinflusst. Entsprechend der Beschleunigung und der dadurch vom Haltemittel beschriebenen Bewegungsbahn erfolgt eine Nickbewegung des Fahrzeuges, das vom Haltemittel gehalten wird und sich elastisch gegen den Schlitten abstützt, wobei sich der Haltepunkt des Haltemittels am Halteelement oder am Fahrzeug ändern kann.

Die Federn können in einer weiteren Ausgestaltung der Erfindung ebenfalls durch die fahrzeugeigenen Federn gebildet sein. Damit wird eine realitätsnahe Nickbewegung des Fahrzeuges erreicht. Wird wie im nachfolgend exemplarisch dargestellten Ausführungsbeispiel die Front des Fahrzeuges entfernt und ein Simulationsmodell, welches weitgehend aus Innenraum und der umliegenden, die Fahrerkabine begrenzenden Karosserie besteht, genutzt, so werden die zusätzlichen elastischen Abstützpunkte am Fahrzeug benötigt.

Zur Sicherung des Fahrzeuges können zusätzlich weitere Führungs- oder Sicherungselemente für das Fahrzeug vorgesehen sein. Diese müssen jedoch eine möglicherweise begrenzte Relativbewegung des Fahrzeuges auf dem Schlitten erlauben.

Weitere Einzelheiten der Erfindung werden nachfolgend anhand der Zeichnungen von schematisch dargestellten Ausführungsbeispielen beschrieben. Diese stellen exemplarische Verkörperungen des Erfindungsgegenstandes dar.

Hierbei zeigen:
- Figur 1: eine schematische Darstellung der erfindungsgemäßen Crashsimulationsanlage als Beschleunigungsschlitten in einer Seitenansicht,
- Figur 2: eine schematische Darstellung der erfindungsgemäßen Crashsimulationsanlage als Verzögerungsschlitten in einer Seitenansicht,
- Figur 3: eine schematische Darstellung der erfindungsgemäßen Crashsimulationsanlage in einer Ansicht von oben,
- Figur 4: eine schematische Darstellung der erfindungsgemäßen Crashsimulationsanlage in einer Ansicht von oben,
- Figur 5: eine Detaildarstellung des Haltepunktes mit angrenzendem Halteelement mit einer Führung des Haltemittels im Halteelement,
- Figur 6: eine Detaildarstellung der Führung,
- Figur 7: eine schematische Darstellung der erfindungsgemäßen Crashsimulationsanlage in einer Ansicht von oben.

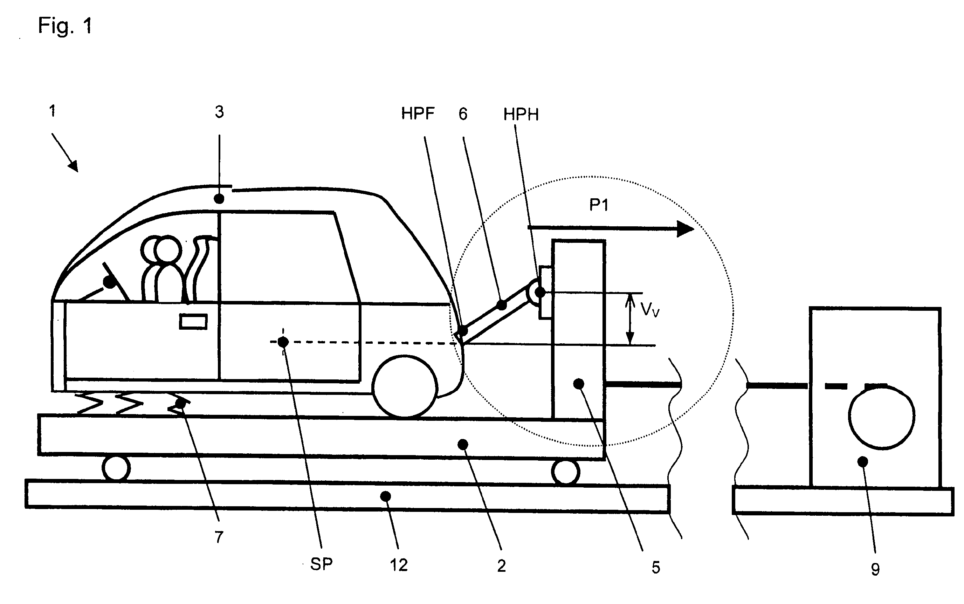

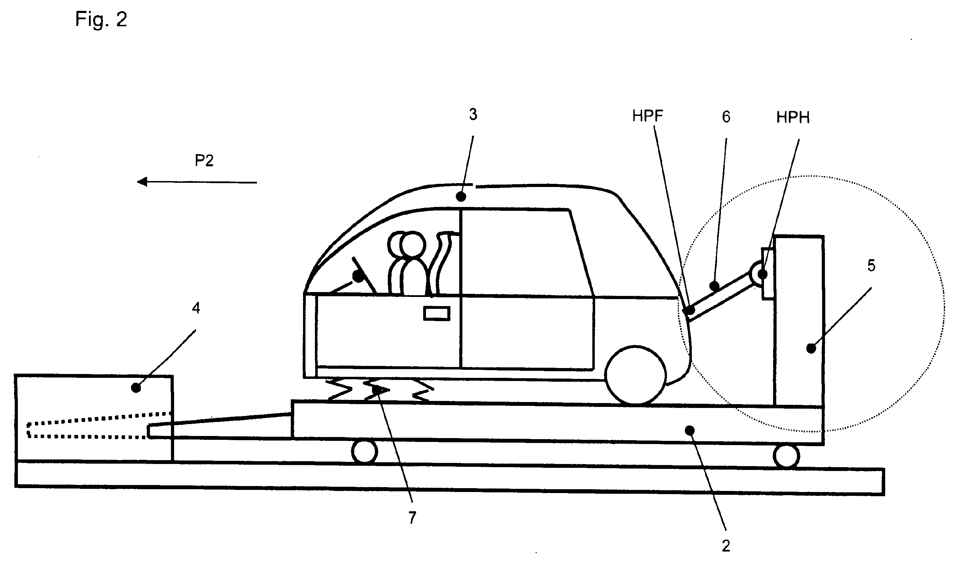

In Fig. 1 ist die schematische Darstellung der erfindungsgemäßen Crashsimulationsanlage 1 in einer Seitenansicht dargestellt. Ein Fahrzeug 3 oder wie dargestellt ein Teil eines Fahrzeuges 3 ist/sind auf einem Schlitten 2 angeordnet und über ein Haltemittel 6, das mit dem Fahrzeug 3 verbunden ist, an einem Halteelement 5 befestigt. Das Haltemittel 6 hält dabei das Fahrzeug 3 nicht ortsfest auf dem Schlitten, vielmehr ist das Haltemittel 6 selbst flexibel vorzugsweise ein Seil. In einer weiterführenden Gestaltung ist das Haltemittel selbst starr jedoch horizontal und/oder vertikal schwenkbar am Fahrzeug 3 und Halteelement 5 angeordnet. Es könnte beispielsweise eine beidseitig in Kugelköpfen gelagerte an Fahrzeug 3 und Halteelement 5 befestigte Koppelstange verwendet werden. Wesentlich ist, dass durch das Haltemittel 6 das Fahrzeug nicht ortsfest auf dem Schlitten 2 gehalten wird, sondern das Halteelement 5 über das Haltemittel 6 Zugkräfte entgegen den auf das Fahrzeug einwirkenden Beschleunigungen aufnimmt. Der dargestellte Pfeil P1 symbolisiert die Bewegung des Schlittens 2. Es handelt sich hierbei um einen sogenannten Beschleunigungsschlitten, bei welchem die Simulation eines realen Fahrzeugcrashs durch eine positive Beschleunigung in Richtung des Pfeils P1, vorzugsweise aus dem Stillstand, erfolgt. Das Halteelement 5 ist dabei fest an den Schlitten 2 gekoppelt und kann auch als Teil des Schlittens 2 ausgeführt sein. In einer möglichen Ausgestaltung ist es in seinem Winkel in horizontaler und/oder vertikaler Ebene zum Schlitten 2 einstellbar bzw. geneigt angeordnet. Der Schlitten 2 ist auf der Crashsimulationsanlage 1 bewegbar und kann zur Spurstabilisierung auf dieser geführt sein. Die Crashsimulationsanlage 1 ist mit einem Antriebselement 9 ausgestattet, das den Schlitten beschleunigt, wobei das erfindungsgemäße Prinzip auch auf Verzögerungsschlitten anwendbar ist, wie die Ausführung zu Fig. 2 zeigt. Derartige Anlagen, bei denen durch Bremsen eines auf eine vordefinierte Geschwindigkeit beschleunigten Schlittens oder durch Beschleunigung des Schlittens aus einer Ruhelage durch die auftretenden Beschleunigungen am Fahrzeug Unfallsituationen simuliert werden, sind Stand der Technik, weshalb auf deren detaillierte Beschreibung verzichtet wird. In der erfindungsgemäßen Ausgestaltung der Crashsimulationsanlage 1 ist das Fahrzeug 3 über das Haltemittel 6 flexibel mit dem Halteelement 5 verbunden. In einer bevorzugten Ausführung der Erfindung ist das Fahrzeug 3 über ein Seil am Halteelement 5 beispielsweise über Seilösen am Fahrzeug 3 und am Halteelement 5 befestigt. Die Beschleunigungskräfte, die bei schnellen Anfahrbewegungen des Schlittens in Richtung P1 auf das Fahrzeug 3 einwirken, werden dabei als Zugkraft vom Haltemittel 6 auf das Halteelement 5 übertragen und von diesem aufgenommen. Das Fahrzeug 3 wird dabei lediglich entgegen der wirkenden Beschleunigung P1 vom Seil gehalten, während sich das Fahrzeug 3 sowohl vertikal als auch horizontal auf dem Schlitten 2 bewegen kann. In der vorliegenden beispielhaften Ausführung ist der Haltepunkt des HPH des Haltemittels 6 am Halteelement 5 oberhalb des Schwerpunktes SP des Fahrzeuges 3 angeordnet. Der Haltepunkt HPF am Fahrzeug 3 und der Haltepunkt HPH am Halteelement 5 weisen in vertikaler Ebene einen Versatz Vᵥ auf. Bei einwirkender positiver Beschleunigung in Richtung des Pfeils P1 wird das Fahrzeug 3 an seinem Heck entsprechend der Masseverteilung und der Beschleunigung angehoben, womit eine reale Bewegungskurve des Fahrzeuges, sog. Nickbewegung beim Aufprall, nachvollzogen wird. Das Fahrzeug 3 sitzt im dargestellten Ausführungsbeispiel mit seinen Hinterrädern auf dem Schlitten 2 auf und stützt sich über Federn 7 an diesem ab. Die Federn 7 sind im Ausführungsbeispiel einseitig fest am Schlitten 2 angeordnet. Diese können jedoch gleichfalls einseitig fest am Fahrzeug 3 angeordnet sein oder beidseitig fahrzeug- sowie schlittenfest montiert sein. Die Federn 7 erzeugen eine Stützkraft gegen das Fahrzeuggewicht und wirken bei Beschleunigungen, positiven wie negativen (Verzögerung) des Schlittens den Nickbewegungen des Fahrzeuges entgegen. Anstelle der Hinterräder kann das Fahrzeug 3 gleichfalls auf weiteren, hier nicht dargestellten Federn stehen oder über eine ebenfalls nicht dargestellte gelenkige Führung am Schlitten beweglich gehalten sein. Es ist ebenfalls vorstellbar, das Fahrzeug auf den Vorder- und Hinterrädern gegen den Schlitten abzustützen, wobei zusätzliche Federn 7 nicht notwendigerweise erforderlich sind. Erweiterungen der Befestigung des Haltemittels 6 am Halteelement 5 bzw. am Fahrzeug 3 sind in den nachfolgend ausgeführten Varianten dargestellt. Diese sind mit dem dargestellten Ausführungsbeispiel gemäß der in Fig. 1 dargestellten Grundvariante kombinierbar. So kann insbesondere der Haltepunkt HPH am Halteelement 5 sowohl vertikal als auch horizontal beweglich sein, um eine beschleunigungsabhängige Verlagerung des Haltepunktes zu erreichen, womit Bewegungskurven eines realen Crashverhaltens nachgebildet werden können. Des weiteren kann der Haltepunkt HPH gleichfalls horizontal versetzt zum Massenschwerpunkt des Fahrzeuges angeordnet sein, um Drehbewegungen um die Fahrzeugmittelachse, z. B. bei einem Aufprall auf ein nicht frontal stehendes Hindernis zu simulieren. Die Nachbildung komplexer Bewegungskurven ist mit horizontal zum Massenschwerpunkt SP des Fahrzeuges 3 versetztem Haltepunkt am Fahrzeug HPF und vertikal zueinander versetzten Haltepunkten an Fahrzeug HPF und Halteelement HPH vorgesehen.

Fig. 2 zeigt die schematische Darstellung der erfindungsgemäßen Crashsimulationsanlage 1 in einer Seitenansicht, wobei es sich um eine Ausführung gemäß Figur 1 handelt, die hier jedoch als Verzögerungsschlitten ausgebildet ist. Das Fahrzeug 3 bzw. ein Teil eines Fahrzeuges 3 ist/sind auf dem Schlitten 2 angeordnet und über ein Haltemittel 6, das mit dem Fahrzeug 3 verbunden ist, an einem Halteelement 5 befestigt. Das Haltemittel 6 hält dabei das Fahrzeug 3 nicht fest auf dem Schlitten 2, vielmehr ist das Haltemittel 6 selbst flexibel, vorzugsweise ein Seil. Die Anordnungsvarianten des Haltemittels 6 entsprechen dabei den zu Fig. 1 beschriebenen. Der dargestellte Pfeil P2 symbolisiert die Bewegung des Schlittens 2. Es handelt sich hierbei um einen sogenannten Verzögerungsschlitten, bei welchem die Simulation eines realen Fahrzeugcrashs durch eine negative Beschleunigung erfolgt. Das Fahrzeug 3 bewegt sich dabei mit dem Schlitten 2 in Pfeilrichtung P1, wobei der Schlitten 2 von einer Bremseinrichtung 4 verzögert bis zum Stillstand gebracht wird. Das Haltemittel 6 ist dabei am Halteelement 5 flexibel befestigt und das Halteelement 5 ist fest mit dem Schlitten 2 verbunden bzw. kann auch als Teil des Schlittens 2 ausgeführt sein. In einer möglichen Ausgestaltung ist es in seinem Winkel in horizontaler und/oder vertikaler Ebene zum Schlitten 2 einstellbar bzw. geneigt angeordnet. Der Schlitten 2 ist auf der Crashsimulationsanlage 1 bewegbar und kann zur Spurstabilisierung auf dieser geführt sein. Die Crashsimulationsanlage 1 ist mit einer - nicht dargestellten - Antriebseinheit ausgestattet, die den Schlitten auf eine vordefinierte Geschwindigkeit beschleunigt, wobei das die Crashsimulation durch Abbremsen des Schlittens 2 mittels der Bremseinrichtung 4 erfolgt. Wie zu Fig. 1 beschrieben sind die erfindungsgemäßen Erweiterungen, die in der Anordnung des Haltemittels 6 am Halteelement 5 und am Fahrzeug 3 in den nachfolgenden Ausführungsvarianten dargestellt sind, ebenfalls auf die Ausführung der Crashsimulationsanlage als Verzögerungsschlitten anwendbar.

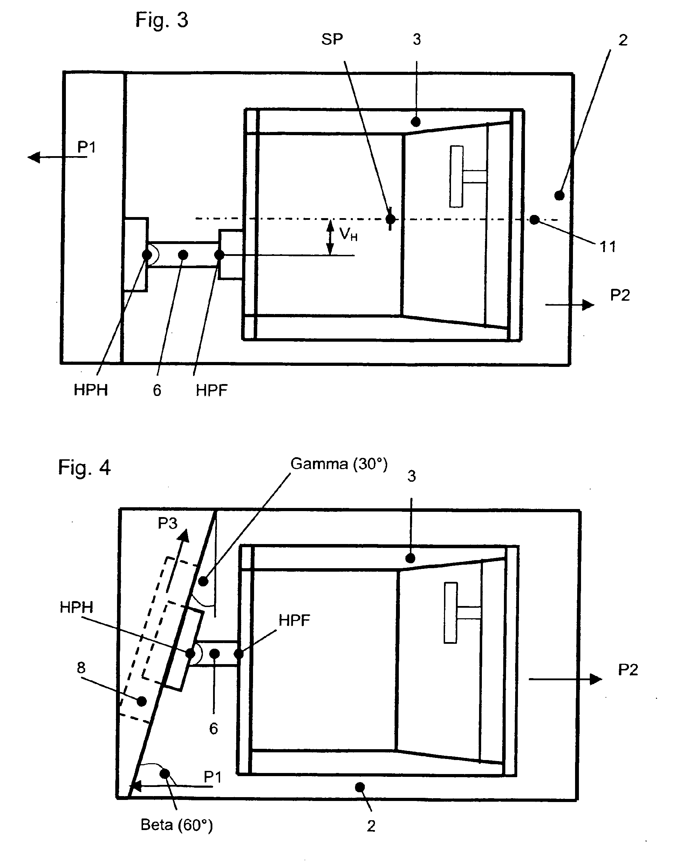

Fig. 3 zeigt die schematische Darstellung der Crashsimulationsanlage in einer Ansicht von oben. Zur Figur 1 identische Bezugszeichen werden dabei gleichlautend verwendet. Das Fahrzeug 3 ist über das daran befestigte Haltemittel 6 am Halteelement 5 befestigt. Der Haltepunkt HPF am Fahrzeug 3 ist bezogen auf die Fahrzeugmittelachse 11 außermittig angeordnet. Der Fahrzeugschwerpunkt SP liegt dabei in der Fahrzeugmittelachse und der Haltepunkt HPF am Fahrzeug ist zum Schwerpunkt und zur Fahrzeugmittelachse in horizontaler Ebene versetzt. Der horizontale Versatz V_{H} hat bei Beschleunigung in Richtung P1 oder beim Abbremsen eines sich in Richtung P2 bewegenden Schlittens eine Drehbewegung des Fahrzeuges 3 in Pfeilrichtung P4 zur Folge. Der Haltepunkt am Fahrzeug HPF kann dabei in einer Weiterbildung der dargestellten Ausführungsform in vertikaler Ebene weitgehend im Fahrzeugschwerpunkt SP liegen, wobei der Haltepunkt am Halteelement HPH über dem Fahrzeugschwerpunkt in vertikaler Ebene liegt. Das Haltemittel 6 verläuft dann ausgehend vom Haltepunkt am Fahrzeug HPF schräg nach oben zum Haltepunkt HPH am Halteelement 5, was bei den einwirkenden Beschleunigungen in Richtung P1 und beim Abbremsen aus einer Bewegung in Richtung P2 ein Anheben des Fahrzeughecks zur Folge hat, womit eine Nickbewegung beim realen Fahrzeugcrash simuliert werden kann.

Fig. 4 zeigt die schematische Darstellung der Crashsimulationsanlage in einer Ansicht von oben. Zu den vorherigen Figuren identische Bezugszeichen werden hier und nachfolgend gleichlautend verwendet. Abweichend von den vorher dargestellten Ausführungsbeispielen weist das Halteelement 5 einen von 90° abweichenden Winkel Beta bezogen auf die Bewegungsrichtung (symbolisiert durch Pfeil P1 für Beschleunigungsschlitten und P2 für einen Verzögerungsschlitten) des Schlittens 2 in horizontaler Ebene auf. Dargestellt ist hier eine Vorzugsvariante mit einem Winkel Beta von 60°, so dass ein sog. 30°-Crashtest (Winkel Gamma = 30°) mit der erfindungsgemäßen Crashsimulationsanlage 1 simuliert werden kann. Die Winkelangaben sind hier als Vorzugswerte zu verstehen. Der Winkelbereich kann um diesen Wert schwanken, um reale Crashsituationen nachzubilden, kann beispielsweise ein beschleunigtes seitliches Wegdrehen des Fahrzeuges auf dem Schlitten verzögert werden, indem das Halteelement flacher gestellt wird, d. h. ein Winkel von Gamma < 30° (Beta >60°) eingestellt wird. Es ist hier hervorzuheben, dass der Haltepunkt des Haltemittels 6 am Halteelement 5 nicht starr festliegt. Der Haltepunkt kann sich beschleunigungsabhängig verändern, da das Haltemittel 6 in einer Führung 8 innerhalb des Halteelements 5 verschiebbar geführt ist. Erfolgt beispielweise eine Beschleunigung des Schlittens 2 in Pfeilrichtung P1, so wird der Haltepunkt in Pfeilrichtung P3 verschoben, da das Haltemittel 6 in der Führung 8 in Richtung P3 gedrängt wird. Unfallnahe Beschleunigungs- sowie Bewegungskurven des auf dem Schlitten 2 angeordneten Fahrzeuges 3 werden dadurch ermöglicht. Ein Wegdrehen des Fahrzeuges 3 bei einem Aufprall auf eine schräg stehende Barriere kann damit simuliert werden. Zusätzlich kann der Haltepunkt HPH am Halteelement 5 höher liegen als der Haltepunkt am Fahrzeug HPF, wodurch zusätzlich eine Nickbewegung durch das Fahrzeug 3 ausgeführt wird.

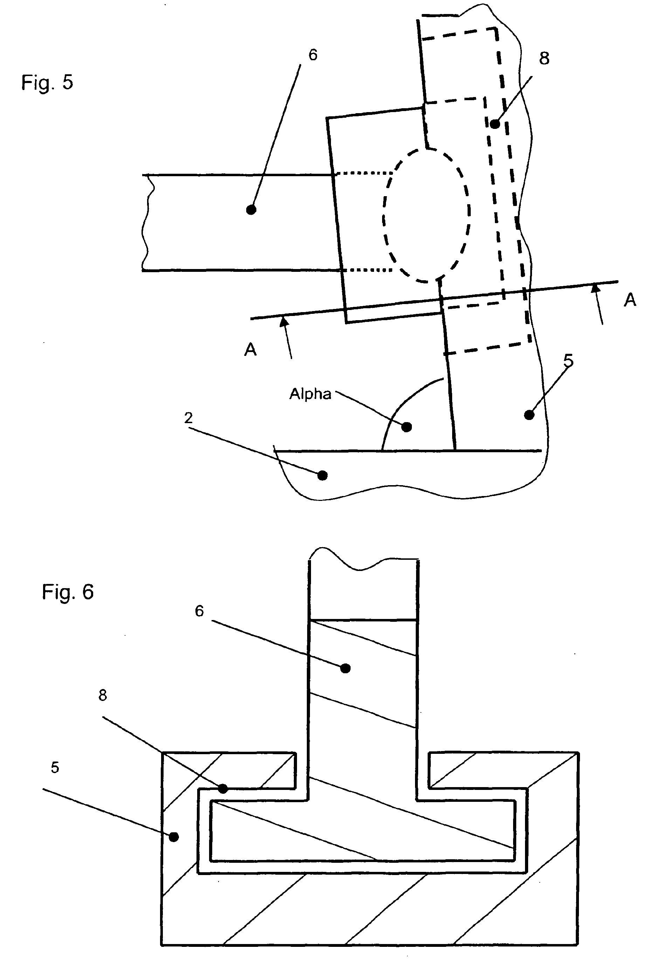

Figur 5 zeigt eine weitere Ausführung des Schlittens 2, bei dem das Halteelement 5 gegenüber dem Schlitten 2 in vertikaler Ebene geneigt ist, also einen einschließenden Winkel Alpha aufweist, der von 90° abweicht. Das Haltemittel 6 ist dabei in einer Führung 8 gehalten, die hier beispielsweise als T-Führung ausgestaltet ist. Dies ermöglicht ein Verlagern des Haltepunktes HPH am Halteelement 5. Bei einer positiven Beschleunigung des Schlittens 2 in Pfeilrichtung P1 wird die Beschleunigung über das Haltemittel 6, welches am nicht dargestellten Fahrzeug 3 an der dem Halteelement 5 abgewandten Seite befestigt ist, auf das Fahrzeug übertragen. Aufgrund der Trägheit des Fahrzeuges wirkt über das Haltemittel 6 eine Zugkraft auf das Halteelement 5, wobei das Haltemittel 6 in der Führung 8 nach oben ausweichen kann. Die Gestaltung ermöglicht die Simulation der Nickbewegung des Fahrzeuges, da aufgrund der Beschleunigung der Schlitten der Haltepunkt HPH nach oben verlagert wird, welches ein heckseitiges Anheben des Fahrzeuges zur Folge hat.

Figur 6 zeigt eine beispielhafte Ausgestaltung der Führung gemäß dem in Fig. 5 gezeigten Schnitt A-A. Das Haltemittel 6 ist dabei in einer T-Führung innerhalb des Halteelements 5 geführt. Es ist entlang der Führungsbahn beweglich und stützt sich jedoch entgegen der Bewegungsrichtung P1 am Halteelement 5 ab.

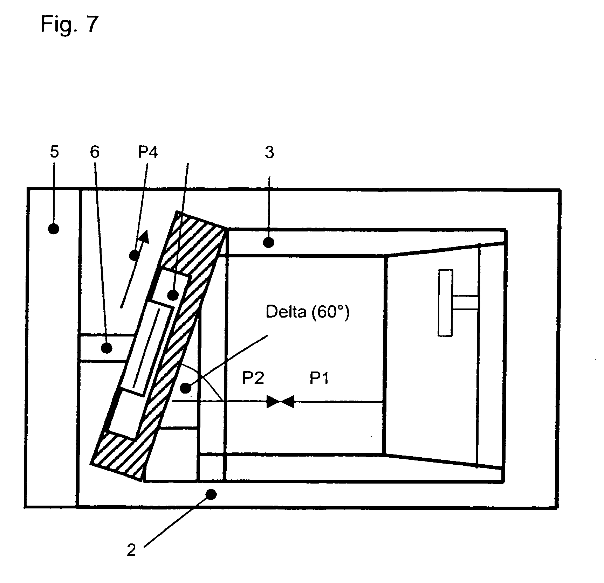

Figur 7 zeigt eine schematische Darstellung der Crashsimulationsanlage in einer Ansicht von oben. Zu den vorherigen Figuren identische Bezugszeichen werden hier gleichlautend verwendet. Abweichend von den vorher dargestellten Ausführungsbeispielen ist der Haltepunkt HPF am Fahrzeug an diesem nicht festliegend, sondern in einer Führung 10 beweglich angeordnet. Der Haltepunkt HPH am Halteelement 5 ist in diesem Ausführungsbeispiel festliegend, wobei über das Haltemittel 6 das Fahrzeug 3 flexibel am Halteelement 5, welches fest mit dem Schlitten 2 verbunden ist, angeordnet ist. Der Haltepunkt HPF verlagert sich bei Beschleunigung des Fahrzeuges in Richtung P1, wobei sich die Fahrzeugfront entlang der Führung 10 in Richtung des Pfeils P4 bewegt. Ein Wegdrehen des Fahrzeuges kann damit simuliert werden. Auch in dieser Ausführungsform kann der Haltepunkt HPH am Halteelement 5 höher liegen als der Haltepunkt HPF am Fahrzeug 3, wodurch zusätzlich eine Nickbewegung des Fahrzeuges erzeugt wird. Es ist in einer Erweiterung ebenfalls vorgesehen, das Haltemittel 6 im Halteelement 5 ebenfalls in einer Führung verlagerbar anzuordnen, so dass sich die Bewegungskurven der Haltepunkte HPH und HPF bei einwirkenden Beschleunigungen überlagern. Die Führungen können sowohl in vertikaler als auch in horizontaler Ebene geneigt verlaufen.

### Bezugszeichenliste

- 1: Crashsimulationsanlage
- 2: Schlitten
- 3: Fahrzeug
- 4: Bremseinrichtung
- 5: Halteelement
- 6: Haltemittel
- 7: Feder
- 8: Führung im Halteelement
- 9: Antriebselement
- 10: Führung am Fahrzeug
- 11: Fahrzeugmittelachse
- 12: Bahn
- SP: Fahrzeugschwerpunkt
- V_{H}: Versatz in horizontaler Ebene des Haltepunktes HPF am Fahrzeug zu dessen Schwerpunkt
- Vᵥ: Versatz in vertikaler Ebene des Haltepunktes HPF am Fahrzeug zum Haltepunkt HPH am Halteelement
- P1: Bewegungsrichtung des Schlittens bei Beschleunigungsschlitten
- P2: Bewegungsrichtung des Schlittens bei Verzögerungsschlitten
- P3: Drehbewegung des Fahrzeuges
- P4: Bewegungsrichtung des Fahrzeuges entlang der Führung bei einwirkender Beschleunigung
- Alpha: Winkel zwischen Halteelement und Schlitten in vertikaler Ebene
- Beta: Winkel zwischen der Bewegungsrichtung des Schlittens (P1) und dem Halteelement in horizontaler Ebene
- Gamma: Winkel zwischen Barriere und der Senkrechten zur Schlittenbewegung
- HPF: Haltepunkt des Haltemittels am Fahrzeug
- HPH: Haltepunkt des Haltemittels am Halteelement

## Patentansprüche

1. Crashsimulationsanlage (1) für Fahrzeuge (3) bestehend aus einem auf einer Bahn (12) beweglich angeordneten Schlitten (2), auf dem ein Fahrzeug (3) oder Teile eines Fahrzeuges (3) angeordnet ist/sind, wobei der Schlitten (2) durch wenigstens eine Antriebs- (9) und/oder Bremseinrichtung (4) beschleunigbar und/oder verzögerbar ist und das Fahrzeug (3) oder dessen Teile in vertikaler Richtung auf dem Schlitten (2) abgestützt ist sind,
**dadurch gekennzeichnet,**
**dass** das auf dem Schlitten (2) angeordnete Fahrzeug (3) oder dessen Teile durch wenigstens ein Haltemittel (6) an einem entgegengesetzt der simulierten Aufprallseite mit dem Schlitten (2) gekoppelten Halteelement (5) horizontal und/oder vertikal relativbeweglich zum Schlitten (2) befestigt ist/sind.

2. Crashsimulationsanlage für Fahrzeuge nach Anspruch 1,
**dadurch gekennzeichnet,**
**dass** das Haltemittel (6) flexibel, vorzugsweise ein Seil ist.

3. Crashsimulationsanlage für Fahrzeuge nach Anspruch 1,
**dadurch gekennzeichnet,**
**dass** das Haltemittel (6) selbst starr und mit dem Fahrzeug (3) und dem Halteelement (5) verbunden ist, jedoch horizontal und/oder vertikal um seinen Haltepunkt am Fahrzeug (HPF) und/oder den Haltepunkt am Haltemittel (HPH) schwenkbar ist.

4. Crashsimulationsanlage für Fahrzeuge nach einem der vorherigen Ansprüche,
**dadurch gekennzeichnet,**
**dass** der Haltepunkt (HPF) des Haltemittels (6) am Fahrzeug (3) in horizontale und/oder vertikale Richtung versetzt zum Haltepunkt (HPH) des Haltemittels (6) am Halteelement (5) angeordnet ist.

5. Crashsimulationsanlage für Fahrzeuge nach einem der vorherigen Ansprüche,
**dadurch gekennzeichnet,**
**dass** der Haltepunkt (HPF) des Haltemittels (6) am Fahrzeug (3) in horizontale und/oder vertikale Richtung versetzt zum Massenschwerpunkt des auf dem Schlitten (2) angeordneten Fahrzeuges (3) ist.

6. Crashsimulationsanlage für Fahrzeuge nach einem der vorherigen Ansprüche,
**dadurch gekennzeichnet,**
**dass** der Haltepunkt des Haltemittels (6) am Fahrzeug (3) (HPF) und/oder am Halteelement (5) (HPH) veränderbar ist.

7. Crashsimulationsanlage für Fahrzeuge nach einem der vorherigen Ansprüche,
**dadurch gekennzeichnet,**
**dass** der Haltepunkt des Haltemittels (6) am Fahrzeug (3) (HPF) und/oder am Halteelement (5) (HPH) innerhalb einer Führung (8) in seiner Lage vertikal und/oder horizontal zum Schlitten (2) beweglich angeordnet ist.

8. Crashsimulationsanlage für Fahrzeuge nach einem der vorherigen Ansprüche,
**dadurch gekennzeichnet,**
**dass** der Haltepunkt des Haltemittels (6) (HPF) am Fahrzeug (3) und/oder am Halteelement (5) (HPH) innerhalb einer Führung (8) beweglich ist, wobei die Führung (8) in horizontaler Ebene gegenüber der Bewegungsrichtung des Schlittens (2) einen Winkel (Beta) verschieden von 90° aufweist.

9. Crashsimulationsanlage für Fahrzeuge nach einem der vorherigen Ansprüche,
**dadurch gekennzeichnet,**
**dass** in horizontaler Ebene der Winkel (Beta), der die mit dem Schlitten (2) oder dem Fahrzeug (3) verbundene Führung (8; 10) gegenüber der Bewegungsrichtung des Schlittens (2) aufweist, vorzugsweise 60° ist.

10. Crashsimulationsanlage für Fahrzeuge nach einem der vorherigen Ansprüche,
**dadurch gekennzeichnet,**
**dass** die am Halteelement (5) oder am Fahrzeug (3) angeordnete Führung (8) in horizontaler Ebene in ihrem Winkel (Beta) gegenüber der Bewegungsrichtung des Schlittens (2) einstellbar ist.

11. Crashsimulationsanlage für Fahrzeuge nach einem der vorherigen Ansprüche,
**dadurch gekennzeichnet,**
**dass** die mit dem Schlitten (2) oder dem Fahrzeug (3) verbundene Führung (8; 10) in vertikaler Ebene in ihrem Winkel (Gamma) gegenüber der Bewegungsrichtung des Schlittens (2) einen von 90° abweichenden Winkel (Alpha) aufweist.

12. Crashsimulationsanlage für Fahrzeuge nach einem der vorherigen Ansprüche,
**dadurch gekennzeichnet,**
**dass** die mit dem Schlitten (2) oder dem Fahrzeug (3) verbundene Führung (8; 10) in vertikaler Ebene in ihrem Winkel (Alpha) gegenüber der Bewegungsrichtung des Schlittens (2) einstellbar ist.

13. Crashsimulationsanlage für Fahrzeuge nach einem der vorherigen Ansprüche,
**dadurch gekennzeichnet,**
**dass** die Führung (8) des Haltemittels (6) am Halteelement (5) angeordnet ist.

14. Crashsimulationsanlage für Fahrzeuge nach einem der vorherigen Ansprüche,
**dadurch gekennzeichnet,**
**dass** die Führung (8) des Haltemittels (6) am Fahrzeug (3) angeordnet ist.

15. Crashsimulationsanlage für Fahrzeuge nach Anspruch 7,
**dadurch gekennzeichnet,**
**dass** die Haltepunkte (HPH; HPF) durch die Führung (8) horizontal oder vertikal verschiebbar angeordnet sind.

16. Crashsimulationsanlage für Fahrzeuge nach einem der vorherigen Ansprüche,
**dadurch gekennzeichnet,**
**dass** die Führung (8) in horizontaler und/oder vertikaler Richtung gegenüber der Bewegungsbahn geneigt einstellbar ist.

17. Crashsimulationsanlage für Fahrzeuge nach einem der vorherigen Ansprüche,
**dadurch gekennzeichnet,**
**dass** die Führung (8) in ihrer Neigung einstellbar sowie der Haltepunkt (HPH o. HPF) in horizontaler und/oder vertikaler Richtung verschiebbar einstellbar ist.

18. Crashsimulationsanlage für Fahrzeuge nach einem der vorherigen Ansprüche,
**dadurch gekennzeichnet,**
**dass** das auf dem Schlitten (2) angeordnete Fahrzeug (3) oder dessen Teile in vertikaler Richtung elastisch gegen den Schlitten (2) abgestützt ist/sind.

19. Crashsimulationsanlage für Fahrzeuge nach einem der vorherigen Ansprüche,
**dadurch gekennzeichnet,**
**dass** das vertikal elastisch auf dem Schlitten (2) abgestützte Fahrzeug (3) oder dessen Teile von wenigstens einer Feder (7) in vertikaler Richtung auf dem Schlitten abgestützt ist/sind.

20. Crashsimulationsanlage für Fahrzeuge nach einem der vorherigen Ansprüche,
**dadurch gekennzeichnet,**
**dass** das vertikal elastisch auf dem Schlitten (2) abgestützte Fahrzeug (3) oder dessen Teile über das fahrzeugeigene Fahrwerk in vertikaler Richtung auf dem Schlitten abgestützt ist/sind.

21. Crashsimulationsanlage für Fahrzeuge nach einem der vorherigen Ansprüche,
**dadurch gekennzeichnet,**
**dass** zusätzlich zur Abstützung eine Führung des Fahrzeuges (3) auf dem Schlitten (2) vorgesehen ist.

22. Crashsimulationsanlage für Fahrzeuge nach einem der vorherigen Ansprüche,
**dadurch gekennzeichnet,**
**dass** Halteelement (5) und Schlitten (2) einstückig ausgeführt sind.

## Claims

1. Crash simulation system (1) for vehicles (3) composed of a carriage (2) which is movably arranged on a track (12) and on which a vehicle (3) or parts of a vehicle (3) are arranged, wherein the carriage (2) can be accelerated and/or decelerated by means of at least one drive device (9) and/or brake device (4), and the vehicle (3) or parts thereof are supported on the carriage (2) in the vertical direction,
**characterized in that**
the vehicle (3) or parts thereof which are arranged on the carriage (2) are attached so as to be horizontally and/or vertically movable in relation to the carriage (2) by at least one securing means (6) on a securing element (5) which is coupled to the carriage (2) on the opposite side to the simulated impact side.

2. Crash simulation system for vehicles according to Claim 1,
**characterized in that**
the securing means (6) is flexible, preferably a cable.

3. Crash simulation system for vehicles according to Claim 1,
**characterized in that**
the securing means (6) is itself rigid and is connected to the vehicle (3) and the securing element (5) but is pivotable horizontally and/or vertically about its securing point on the vehicle (HPF) and/or the securing point on the securing means (HPH).

4. Crash simulation system for vehicles according to one of the preceding claims,
**characterized in that**
the securing point (HPF) of the securing means (6) on the vehicle (3) is arranged offset in the horizontal and/or vertical direction with respect to the securing point (HPH) of the securing means (6) to the securing element (5).

5. Crash simulation system for vehicles according to one of the preceding claims,
**characterized in that**
the securing point (HPF) of the securing means (6) on the vehicle (3) is offset in the horizontal and/or vertical direction with respect to the centroid of the vehicle (3) which is arranged on the carriage (2).

6. Crash simulation system for vehicles according to one of the preceding claims,
**characterized in that**,
the securing point of the securing means (6) to the vehicle (3) (HPF) and/or to the securing element (5) (HPH) can be changed.

7. Crash simulation system for vehicles according to one of the preceding claims,
**characterized in that**
the securing point of the securing means (6) to the vehicle (3) (HPF) and/or to the securing element (5) (HPH) is movably arranged within a guide (8) so as to be vertically and/or horizontally movable in its position with respect to the carriage (2).

8. Crash simulation system for vehicles according to one of the preceding claims,
**characterized in that**
the securing point of the securing means (6) (HPF) to the vehicle (3) and/or to the securing element (5) (HPH) is movable within a guide (8), wherein the guide (8) has an angle (Beta) which is different from 90° in the horizontal plane with respect to the direction of movement of the carriage (2).

9. Crash simulation system for vehicles according to one of the preceding claims,
**characterized in that**
in the horizontal plane, the angle (Beta) which the guide (8; 10) which is connected to the carriage (2) or the vehicle (3) forms with the direction of movement of the carriage (2) is preferably 60°.

10. Crash simulation system for vehicles according to one of the preceding claims,
**characterized in that**
the guide (8) which is arranged on the securing element (5) or on the vehicle (3) is adjustable in the horizontal plane in its angle (Beta) with respect to the direction of movement of the carriage (2).

11. Crash simulation system for vehicles according to one of the preceding claims,
**characterized in that**
the guide (8; 10) which is connected to the carriage (2) or the vehicle (3) has, in its angle (Gamma) with respect to the direction of movement of the carriage (2), an angle (Alpha) which differs from 90° in the vertical plane.

12. Crash simulation system for vehicles according to one of the preceding claims,
**characterized in that**
the guide (8; 10) which is connected to the carriage (2) or the vehicle (3) is adjustable in its angle (Alpha) with respect to the direction of movement of the carriage (2) in the vertical plane.

13. Crash simulation system for vehicles according to one of the preceding claims,
**characterized in that**
the guide (8) of the securing means (6) is arranged on the securing element (5).

14. Crash simulation system for vehicles according to one of the preceding claims ;
**characterized in that**
the guide (8) of the securing means (6) is arranged on the vehicle (3).

15. Crash simulation system for vehicles according to Claim 7,
**characterized in that**
the securing points (HPH; HPF) are arranged so as to be horizontally or vertically displaceable by means of the guide (8).

16. Crash simulation system for vehicles according to one of the preceding claims,
**characterized in that**
the guide (8) is adjustable in an inclined fashion in the horizontal and/or vertical directions with respect to the movement track.

17. Crash simulation system for vehicles according to one of the preceding claims,
**characterized in that**
the inclination of the guide (8) is adjustable and the securing point (HPH or HPF) is adjustable in a displaceable fashion in the horizontal and/or vertical directions.

18. Crash simulation system for vehicles according to one of the preceding claims,
**characterized in that**
the vehicle (3) or parts thereof which are arranged on the carriage (2) are supported elastically against the carriage (2) in the vertical direction.

19. Crash simulation system for vehicles according to one of the preceding claims,
**characterized in that**
the vehicle (3) or parts thereof which are supported elastically on the carriage (2) in the vertical direction are supported on the carriage in the vertical direction by at least one spring (7).

20. Crash simulation system for vehicles according to one of the preceding claims,
**characterized in that**
the vehicle (3) or parts thereof which are supported elastically on the carriage (2) in the vertical direction are supported on the carriage in the vertical direction by means of the vehicle's own chassis.

21. Crash simulation system for vehicles according to one of the preceding claims,
**characterized in that**,
in addition to the support, a guide for the vehicle (3) is provided on the carriage (2).

22. Crash simulation system for vehicles according to one of the preceding claims,
**characterized in that**
the securing element (5) and carriage (2) are embodied in one piece.

## Revendications

1. Installation de simulation de crash (1) pour véhicules automobiles (3) constituée d'un chariot (2) disposé de manière mobile sur un rail (12), sur lequel un véhicule (3) ou des parties d'un véhicule (3) est/sont disposé(es), le chariot (2) pouvant être accéléré et/ou ralenti par au moins un dispositif d'entraînement (9) et/ou de freinage (4) et le véhicule (3) ou les parties de celui-ci est/sont appuyé(es) dans la direction verticale sur le chariot (2),
**caractérisée en ce que**,
le véhicule (3) disposé sur le chariot (2) ou les parties de celui-ci est/sont fixé(es) par au moins un moyen de retenue (6) sur un élément de retenue (5) couplé au chariot à l'opposé du côté d'impact simulé horizontalement et/ou verticalement en étant mobile relativement au chariot (2).

2. Installation de simulation de crash pour véhicules selon la revendication 1,'
**caractérisée en ce que**,
le moyen de retenue (6) est flexible, de préférence un câble.

3. Installation de simulation de crash pour véhicules selon la revendication 1,
**caractérisée en ce que,**
le moyen de retenue (6) est lui-même rigide et est relié au véhicule (3) et à l'élément de retenue (5), mais peut pivoter horizontalement et/ou verticalement autour de son point de retenue sur le véhicule (HPF) et/ou autour du point de retenue sur le moyen de retenue (HPH).

4. Installation de simulation de crash pour véhicules selon une des revendications précédentes,
**caractérisée en ce que**,
le point de retenue (HPF) du moyen de retenue (6) sur le véhicule (3) est disposé en étant décalé dans la direction horizontale et/ou verticale par rapport au point de retenue (HPH) du moyen de retenue (6) sur l'élément de retenue (5).

5. Installation de simulation de crash pour véhicules selon une des revendications précédentes,
**caractérisée en ce que**,
le point de retenue (HPF) du moyen de retenue (6) sur le véhicule (3) est disposé en étant décalé dans la direction horizontale et/ou verticale par rapport au centre de gravité de masse du véhicule (3) disposé sur le chariot (2).

6. Installation de simulation de crash pour véhicules selon une des revendications précédentes,
**caractérisée en ce que**,
le point de retenue du moyen de retenue (6) peut être modifié sur le véhicule (3) (HPF) et/ou sur l'élément de retenue (5) (HPH).

7. Installation de simulation de crash pour véhicules selon une des revendications précédentes,
**caractérisée en ce que**,
le point de retenue du moyen de retenue (6) sur le véhicule (3) (HPF) et/ou sur l'élément de retenue (5) (HPH) est disposé en étant mobile dans sa position verticalement et/ou horizontalement par rapport au chariot (2) à l'intérieur d'une coulisse (8).

8. Installation de simulation de crash pour véhicules selon une des revendications précédentes,
**caractérisée en ce que**,
le point de retenue du moyen de retenue (6) (HPF) est mobile sur le véhicule (3) et/ou sur l'élément de retenue (5) (HPH) à l'intérieur d'une coulisse (8), la coulisse (8) présentant dans un plan horizontal par rapport à la direction de mouvement du chariot (2) un angle (bêta) différent de 90°.

9. Installation de simulation de crash pour véhicules selon une des revendications précédentes,
**caractérisée en ce que**,
dans un plan horizontal l'angle (bêta), que présente la coulisse (8 ; 10) reliée au chariot (2) ou au véhicule (3) par rapport à la direction de mouvement du chariot (2), est de préférence de 60°.

10. Installation de simulation de crash pour véhicules selon une des revendications précédentes,
**caractérisée en ce que**,
l'angle (bêta) de la coulisse (8) disposée sur l'élément de retenue (5) ou sur le véhicule (3) peut être réglé dans un plan horizontal par rapport à la direction de mouvement du chariot (2).

11. Installation de simulation de crash pour véhicules selon une des revendications précédentes,
**caractérisée en ce que**,
la coulisse (8 ; 10) reliée au chariot (2) ou au véhicule (3) présente dans un plan vertical dans son angle (gamma) par rapport à la direction de mouvement du chariot (2) un angle (alpha) déviant de 90°.

12. Installation de simulation de crash pour véhicules selon une des revendications précédentes,
**caractérisée en ce que**,
la coulisse (8 ; 10) reliée au chariot (2) ou au véhicule (3) peut être réglée dans un plan vertical dans son angle (alpha) par rapport à la direction de mouvement du chariot (2).

13. Installation de simulation de crash pour véhicules selon une des revendications précédentes,
**caractérisée en ce que**,
la coulisse (8) du moyen de retenue (6) est disposée sur l'élément de retenue (5).

14. Installation de simulation de crash pour véhicules selon une des revendications précédentes,
**caractérisée en ce que**,
la coulisse (8) du moyen de retenue (6) est disposée sur le véhicule (3).

15. Installation de simulation de crash pour véhicules selon la revendication 7,
**caractérisée en ce que**,
les points de retenue (HPH ; HPF) sont disposés de manière déplaçable horizontalement ou verticalement par la coulisse (8).

16. Installation de simulation de crash pour véhicules selon une des revendications précédentes,
**caractérisée en ce que**,
la coulisse (8) peut être réglée en étant inclinée dans la direction horizontale et/ou verticale par rapport au trajet de mouvement.

17. Installation de simulation de crash pour véhicules selon une des revendications précédentes,
**caractérisée en ce que**,
la coulisse (8) peut être réglée dans son inclinaison et le point de retenue (HPH ou HPF) peut être réglé de manière à être déplaçable dans la direction horizontale et/ou verticale.

18. Installation de simulation de crash pour véhicules selon une des revendications précédentes,
**caractérisée en ce que**,
le véhicule (3) disposé sur le chariot (2) ou des parties de celui-ci est/sont appuyé(es) dans la direction verticale élastiquement contre le chariot (2).

19. Installation de simulation de crash pour véhicules selon une des revendications précédentes,
**caractérisée en ce que**,
le véhicule (3) appuyé élastiquement à la verticale sur le chariot (2) ou des parties de celui-ci est/sont appuyé(es) par au moins un ressort (7) dans la direction verticale sur le chariot.

20. Installation de simulation de crash pour véhicules selon une des revendications précédentes,
**caractérisée en ce que**,
le véhicule (3) appuyé élastiquement à la verticale sur le chariot (2) ou des parties de celui-ci est/sont appuyé(es) par l'intermédiaire du mécanisme de roulement propre au véhicule dans la direction verticale sur le chariot.

21. Installation de simulation de crash pour véhicules selon une des revendications précédentes,
**caractérisée en ce que**,
en supplément, dans un objectif d'appui, une coulisse du véhicule (3) est prévue sur le chariot (2).

22. Installation de simulation de crash pour véhicules selon une des revendications précédentes,
**caractérisée en ce que,**
l'élément de retenue (5) et le chariot (2) sont réalisés en un seul bloc.
